# EUROPEAN PATENT SPECIFICATION

(11) **EP 0 934 324 B1**
(45) Date of publication and mention of the grant of the patent: **18.12.2002**
(21) Application number: 97944621.8
(22) Date of filing: 06.10.1997
(51) Int. Cl.: C07F 9/22, C07F 9/572

(54) **PROCESS FOR SYNTHESIZING CARBAPENEM SIDE CHAIN INTERMEDIATES**
VERFAHREN ZUR HERSTELLUNG VON ZWISCHENPRODUKTEN IN HERSTELLUNG VON CARBAPENEM-SEITENKETTEN
PROCEDE POUR SYNTHETISER DES PRODUITS INTERMEDIAIRES DE LA CHAINE LATERALE DE CARBAPENEM

(30) Priority: 10.10.1996 US 28966 P; 15.01.1997 GB 9700696
(43) Date of publication of application: 11.08.1999
(73) Proprietor: Merck & Co., Inc. (a New Jersey corp.), Rahway, N.J. 07065 (US)
(72) Inventor: BRANDS, Karel, M., J., Rahway, NJ 07065 (US)
(74) Representative: Thompson, John Dr.
(86) International application number: US9717955
(87) International publication number: WO98015561

(56) References cited:
- US-A- 4 558 034
- US-A- 5 041 497
- US-A- 5 478 820
- YIN Y ET AL: "N-Phosphoryl amino acids and peptides. Part I. The crystal and molecular structure of N-(O,O-diisopropyl phosphoryl)-trans-4-hydroxy -DL-proline" PHOSPHORUS SULFUR (PREEDF,0308664X);1988; VOL.39 (1-2); PP.131-7, XP000910488 Acad. Sin.;Inst. Chem.; Beijing; Peop. Rep. China (CN)
- GAI-JIAO JI: "Synthesis of N-(Diisopro- pyloxyphosphoryl)amino acids and peptides" SYNTHESIS., no. 6, June 1988 (1988-06), pages 444-448, XP002138452 GEORG THIEME VERLAG. STUTTGART., DE ISSN: 0039-7881
- BRANDS K M J ET AL: "A Practical Preparation of Diisopropyl Phosphoryl Protected Amino Acids" TETRAHEDRON LETTERS,NL,ELSEVIER SCIENCE PUBLISHERS, AMSTERDAM, vol. 39, no. 52, 24 December 1998 (1998-12-24), pages 9583-9586, XP004144260 ISSN: 0040-4039

## Description

### BACKGROUND OF THE INVENTION

The present invention relates to a process of synthesizing compounds that are useful in the manufacture of carbapenem side chains. These carbapenem antibiotic compounds are effective in the treatment of infections caused by susceptible bacterial organisms.

In the past, the synthesis of appropriately substituted hydroxyprolines has been conducted in the presence of a mixture of carbon tetrachloride, an amine base, e. g., triethylamine, water and an inert organic cosolvent, e.g., ethanol. See, e.g., Synthesis, 1988: 444-448. This process is somewhat undesirable in that it uses excess amounts of reagents and it uses and generates chlorinated hydrocarbons. The present invention utilizes stoichiometric amounts of more economical reagents and generates little undesirable side products.

### SUMMARY OF THE INVENTION

A process for the synthesis of an N-(di-substituted phosphoryl)-trans-4-hydroxy-L-proline of the formula I : 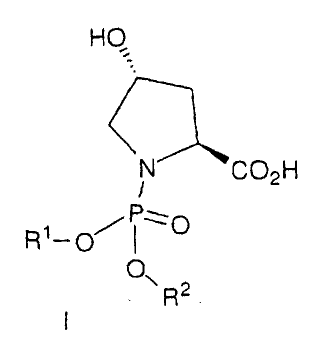 wherein R¹ and R² independently represent C₁₋₁₈ alkyl, phenyl or phenyl-C₁₋₁₈ alkyl, or R¹ and R² are taken in combination to represent C₂₋₄ alkylidene or phenyl, is disclosed wherein trans-4-hydroxy-L-proline of the formula II: 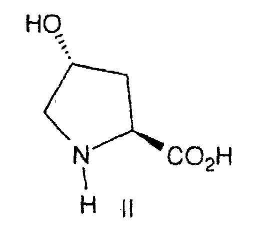 is reacted with a di-(substituted) phosphite of the formula III: 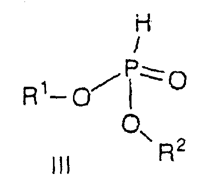 in the presence of sodium hypochlorite and sodium hydroxide to produce a compound of formula I.

### DETAILED DESCRIPTION OF THE INVENTION

As used herein, C₁₋₁₈ alkyl refers to straight and branched alkyl groups, including C₅₋₁₈ alkyl groups which can be cyclic or bicyclic.

Likewise, the values of R¹ and R² include phenyl, phenyl-substituted C₁₋₁₈ alkyl and C₂₋₄ alkylidene. Preferred values of R¹ and R² include methyl, ethyl, n-propyl, isopropyl, n-butyl, t-butyl, phenyl, benzyl, 2-ethylhexyl, decyl, lauryl and octadecyl. The preferred value of R¹ and R² taken in combination is ethylene or phenyl. The most preferred value of R¹ and R² is isopropyl.

The resulting compounds, III are useful in the synthesis of carbapenem antibiotics, such as the compounds that are described in U. S. Pat. No. 5,478,820 granted on December 26, 1995.

Generally, the reaction ingredients are combined slowly at a reduced temperature, e.g., about 0 to about 5°C. The pH can be maintained at about 9.0 by adding a suitable quantity of sodium hydroxide. In a preferred aspect of the invention, the pH of the reaction is maintained at about 9.0.

Sodium hypochlorite can be used in concentrations ranging from about 5% to about 20 weight %.

Upon completion of the reaction, the pH of the solution can be adjusted with acid, and the desired compound isolated. Typically a crystalline product can be obtained.

In a preferred embodiment of the invention, the process is as described above wherein R¹ and R² independently or in combination represent members selected from the group consisting of: methyl, ethyl, n-propyl, isopropyl, n-butyl, t-butyl, phenyl, benzyl, 2-ethylhexyl, decyl, lauryl, octadecyl and ethylene.

In a preferred embodiment of the invention, the present process is as described above wherein R¹ and R² independently represent C₁₋₁₈ alkyl.

In another preferred embodiment of the invention, the process is as described above wherein R¹ and R² independently represent phenyl-substituted C₁₋₁₈ alkyl.

In another preferred embodiment of the invention, the process is as described above wherein R¹ and R² represent phenyl.

In another preferred embodiment of the invention, the process is as described above wherein R¹ and R² taken in combination represent C₂₋₄ alkylidene or phenyl.

In another preferred embodiment of the invention, the process is as described above wherein R¹ and R² taken in combination represent ethylene or phenyl.

In a more preferred embodiment of the invention, the process described herein relates to the synthesis of N-(diisopropyl phosphoryl)-trans-4-hydroxy-L-proline of the formula Ia: 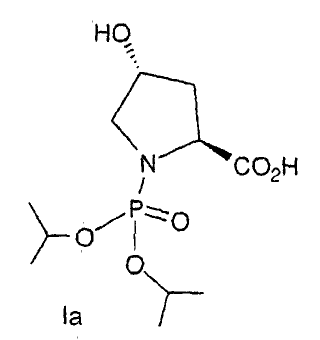 which comprises reacting trans-4-hydroxy-L-proline of the formula II: 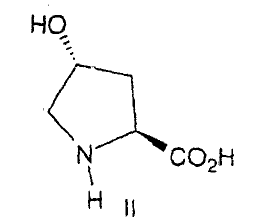 with diisopropyl phosphite of the formula IIIa: 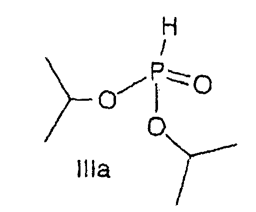 in the presence of sodium hypochlorite and sodium hydroxide to produce a compound of formula Ia.

The invention is further illustrated with the following nonlimiting example.

### EXAMPLE 1

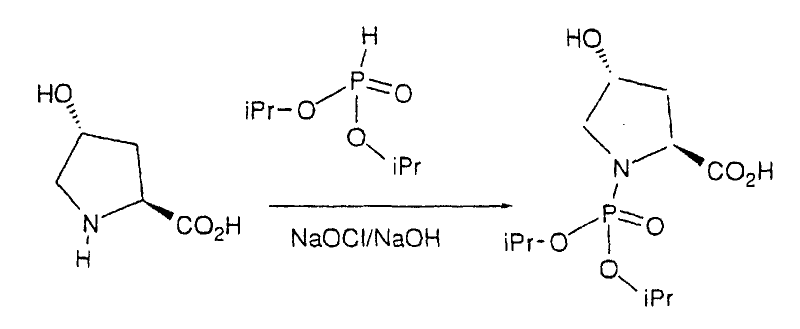

A mixture of water (12 L) and trans-hydroxy proline (5 Kg) was cooled to 0-5°C. The pH of the solution was adjusted to 9.0 with NaOH (25%) and diisopropylphosphite (7.0 kg) was added.

Sodium hypochlorite (12.5 wt % NaOCI) (20 L) was added while maintaining the pH at 9.0 by the addition of sodium hydroxide.

After completion, the reaction was quenched with sodium bisulfite (750 g.) over 15 minutes. The pH of the solution was adjusted from neutrality to approximately 2 by the addition of conc. HCl at 0-5°C, and sodium chloride (6.0 Kg) was added. The aqueous solution was extracted with isopropyl acetate (50 L aliquots at 0-5°C). The target compound (8.5 Kg) was isolated via crystallization.

## Claims

1. A process for the synthesis of an N-(di-substituted phosphoryl)-trans-4-hydroxy-L-proline of the formula I : 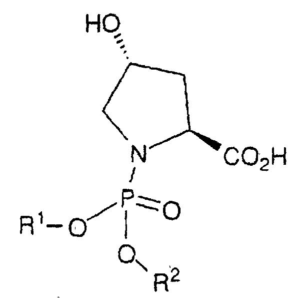 wherein R¹ and R² independently represent C₁₋₁₈ alkyl, phenyl or phenyl-C₁₋₁₈ alkyl, or R¹ and R² are taken in combination to represent C₂₋₄ alkylidene or phenyl,
wherein trans-4-hydroxy-L-proline of the formula II: 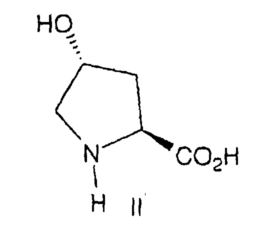 is reacted with a di-(substituted) phosphite of the formula III: 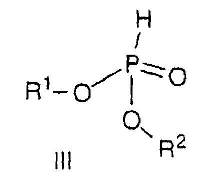 in the presence of sodium hypochlorite and sodium hydroxide to produce a compound of formula I.

2. A process in accordance with claim I wherein R¹ and R² independently represent C₁₋₁₈ alkyl.

3. A process in accordance with claim 1 wherein R¹ and R² independently represent phenyl-substituted C₁₋₁₈ alkyl.

4. A process in accordance with claim 1 wherein R¹ and R² each independently represent phenyl.

5. A process in accordance with claim 1 wherein R¹ and R² taken in combination represent C₂₋₄ alkylidene or phenyl.

6. A process in accordance with claim 5 wherein R¹ and R² taken in combination represent ethylene.

7. A process in accordance with claim 1 wherein R¹ and R² independently or in combination represent members selected from the group consisting of: methyl, ethyl, n-propyl, isopropyl, n-butyl, t-butyl, phenyl, benzyl, 2-ethylhexyl, decyl, lauryl, octadecyl and ethylene.

8. A process for the synthesis of N-(diisopropyl phosphoryl)-trans-4-hydroxy-L-proline of the formula la: 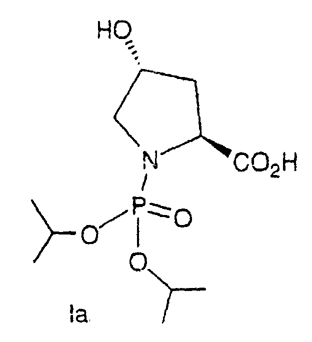 which comprises reacting trans-4-hydroxy-L-proline of the formula II: 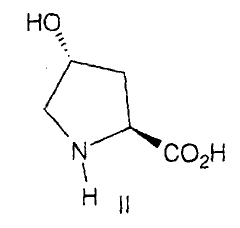 with diisopropyl phosphite of the formula IIIa: 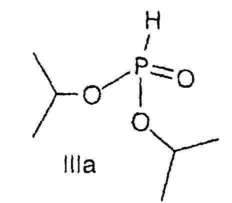 in the presence of sodium hypochlorite and sodium hydroxide to produce a compound of formula la.

9. A process in accordance with claim 1 wherein the pH of the reaction is maintained at about 9.0.

## Patentansprüche

1. Ein Verfahren zur Synthese eines N-(Disubstituiert.-Phosphoryl)-trans-4-hydroxy-L-prolins der Formel I: 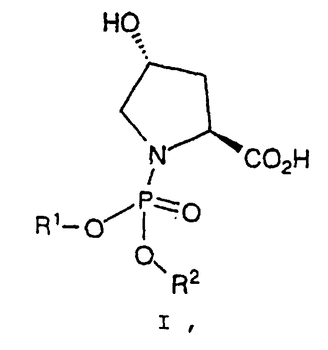 wobei R¹ und R² unabhängig C₁₋₁₈-Alkyl, Phenyl oder Phenyl-C₁₋₁₈-alkyl bedeuten oder R¹ und R² zusammengefaßt sind, um C₂₋₄-Alkyliden oder Phenyl zu bedeuten,
bei dem trans-4-Hydroxy-L-prolin der Formel II: 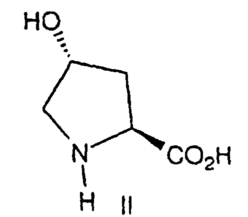 mit einem disubstituiertem Phosphit der Formel III: 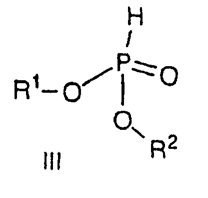 in Gegenwart von Natriumhypochlorit und Natriumhydroxid umgesetzt wird, um eine Verbindung der Formel I zu erzeugen.

2. Ein Verfahren gemäß Anspruch 1, wobei R¹ und R² unabhängig C₁₋₁₈-Alkyl bedeuten.

3. Ein Verfahren gemäß Anspruch 1, wobei R¹ und R² unabhängig phenylsubstituiertes C₁₋₁₈-Alkyl bedeuten.

4. Ein Verfahren gemäß Anspruch 1, wobei R¹ und R² jeweils unabhängig Phenyl bedeuten.

5. Ein Verfahren gemäß Anspruch 1, wobei R¹ und R² zusammengefaßt C₂₋₄-Alkyliden oder Phenyl bedeuten.

6. Ein Verfahren gemäß Anspruch 5, wobei R¹ und R² zusammengefaßt Ethylen bedeuten.

7. Ein Verfahren gemäß Anspruch 1, wobei R¹ und R² unabhängig oder in Kombination Elemente bedeuten, die ausgewählt sind aus der Gruppe, bestehend aus: Methyl, Ethyl, n-Propyl, Isopropyl, n-Butyl, t-Butyl, Phenyl, Benzyl, 2-Ethylhexyl, Decyl, Lauryl, Octadecyl und Ethylen.

8. Ein Verfahren zur Synthese von N-(Diisopropylphosphoryl)-trans-4-hydroxy-L-prolin der Formel Ia: 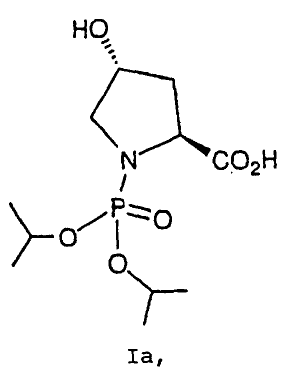 das die Umsetzung von trans-4-Hydroxy-L-prolin der Formel II: 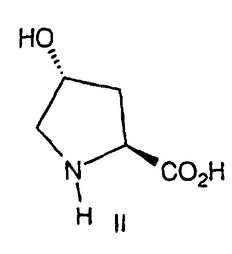 mit Diisopropylphosphit der Formel IIIa: 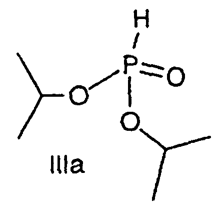 in Gegenwart von Natriumhypochlorit und Natriumhydroxid umfaßt, um eine Verbindung der Formel Ia zu ergeben.

9. Ein Verfahren gemäß Anspruch 1, bei dem der pH-Wert der Reaktion bei etwa 9,0 gehalten wird.

## Revendications

1. Procédé pour la synthèse d'une N-(phosphoryl disubstitué)-*trans*-4-hydroxy-L-proline de formule I : 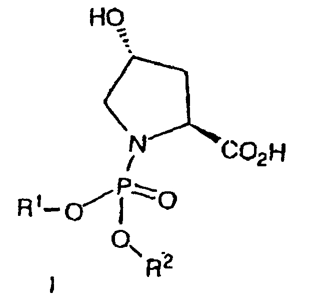 dans laquelle R¹ et R² représentent indépendamment un groupe alkyle en C₁₋₁₈, phényle ou phényl-alkyl(C₁₋₁₈), ou R¹ et R² représentent ensemble un groupe alkylidène en C₂₋₄ ou phényle,
dans lequel on fait réagir la *trans*-4-hydroxy-L-proline de formule II : 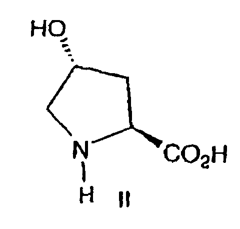 avec un phosphite disubstitué de formule III : 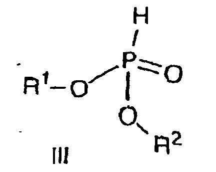 en présence d'hypochlorite de sodium et d'hydroxyde de sodium, pour obtenir un composé de formule I.

2. Procédé selon la revendication 1, dans lequel R¹ et R² représentent indépendamment un groupe alkyle en C₁₋₁₈.

3. Procédé selon la revendication 1, dans lequel R¹ et R² représentent indépendamment un groupe alkyle en C₁₋₁₈ substitué par le groupe phényle.

4. Procédé selon la revendication 1, dans lequel R¹ et R² représentent chacun indépendamment le groupe phényle.

5. Procédé selon la revendication 1, dans lequel R¹ et R² représentent ensemble un groupe alkylidène en C₂₋₄ ou phényle.

6. Procédé selon la revendication 5, dans lequel R¹ et R² représentent ensemble le groupe éthylène.

7. Procédé selon la revendication 1, dans lequel R¹ et R² représentent indépendamment ou ensemble des groupes choisis dans le groupe constitué par les groupes méthyle, éthyle, n-propyle, isopropyle, n-butyle, tert-butyle, phényle, benzyle, 2-éthylhexyle, décyle, lauryle, octadécyle et éthylène.

8. Procédé pour la synthèse de la N-(diisopropylphosphoryl)-*trans*-4-hydroxy-L-proline de formule Ia : 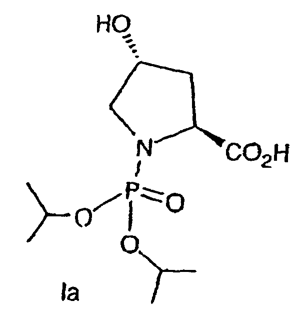 qui comprend la mise en réaction de la *trans*-4-hydroxy-L-proline de formule II 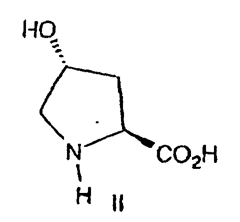 avec du phosphite de diisopropyle de formule IIIa : 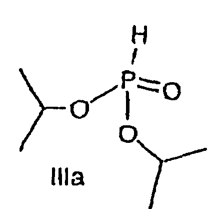 en présence d'hypochlorite de sodium et d'hydroxyde de sodium, pour donner un composé de formule Ia.

9. Procédé selon la revendication 1, dans lequel le pH du mélange réactionnel est maintenu à environ 9,0.
